# EUROPEAN PATENT APPLICATION

(11) **EP 1 694 042 A2**
(43) Date of publication of application: **23.08.2006**
(21) Application number: 06003495.6
(22) Date of filing: 21.02.2006
(51) Int. Cl.: H04M 1/725

(54) **Mobile communication terminal for outputting schedule information based on the location of user and method thereof**

(30) Priority: 21.02.2005 KR 2005014249; 17.02.2006 KR 2006015537
(71) Applicant: Samsung Electronics Co., Ltd., Yeongtong-gu Suwon-si, Gyeonggi-do (KR)
(72) Inventor: Kim, Hyun-Ji, Yeongtong-gu, Suwon-si, Gyeonggi-do (KR); Kim, Jae-Ho, Yeongtong-gu, Suwon-si, Gyeonggi-do (KR); Seo, Jeong-Wook, Yeongtong-gu, Suwon-si, Gyeonggi-do (KR)
(74) Representative: Lang, Johannes

(57) **Abstract**

A method and apparatus of outputting schedule information based on the location of a mobile communication terminal is provided. The method includes the steps of: registering, in response to a user's request, at least one piece of location information for determining whether to inform of schedule information based on the location of the mobile communication terminal, and schedule information corresponding to the location information; detecting current location information of the mobile communication terminal; if the current location of the mobile communication terminal is detected, determining whether to output schedule information corresponding to the location based on the registered location infonnation; and selectively outputting schedule information according to the determination result. Accordingly, the user's convenience increases by informing the user of registered schedule information based on the location of a mobile communication tenninal.

## Description

### BACKGROUND OF THE INVENTION

### 1. Field of the Invention

The present invention relates generally to a mobile communication terminal. More particularly, the present invention relates to functions of a mobile communication terminal for outputting schedule information based on the location of a user and a method thereof.

### 2. Description of the Related Art

Commonly, a "mobile communication terminal" refers to a device used by a user to make a call or exchange data with another such as a cellular phone, a Personal Digital Assistant (PDA), a Personal Communication Service (PCS) phone, an International Mobile Telecommunication (IMT)-2000 terminal, or a Global System Mobile communication (GSM) terminal.

Such mobile communication terminals are considered necessities to many all over the world. Today, mobile communication terminals are smaller, slimmer, and lighter. This simplifies portability and functionality. Also, mobile communication terminals have more multimedia functions, increasing the ease with which multiple functions can be executed.

Mobile communication terminals originally introduced a phone call function. As technology developed , mobile communication terminals expanded to introduce a short message service function, a memory function with which users can store and search for telephone numbers, a lock function, an alarm function, an area number identification function, a schedule management function, a camera function, a digital broadcast receive function, a game function, etc.

In particular, the schedule management function of the additional functions allows a user to register a date or time based schedule or calendar and be notified of the registered schedule on the date or time by checking the time through an internal timer.

When a user registers a schedule of business meetings and/or customer consultations into a mobile communication terminal, the user registers the meeting times and contents on the meeting places and documents to be prepared. For example, when a user has a schedule of business meetings with different topics in meeting rooms A, B, C, and D, the user registers each meeting time to join in each of the meeting rooms A, B, C, and D and contents related to documents required for each business meeting. In the case where the topics of the business meetings are different, the documents required for each business meeting will be different from each other.

However, since the schedule management function informs a user of a registered schedule at the relevant time, the user managing various schedules cannot recognize schedule information registered by the user unless a mobile communication terminal alarms the schedule information at the event time. Thus, the user may occasionally arrive at the meeting room late or join the meeting without essential documents.

Accordingly, there is a need for an improved system and method for providing a user with information based on the user's location to help the user recognize registered schedule information.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a mobile communication terminal for outputting schedule information based on the location of a user and a method thereof.

Another object of an exemplary embodiment of the present invention is to provide a mobile communication terminal for increasing a user's convenience by providing a schedule management function and a method thereof.

According to one aspect of an exemplary embodiment of the present invention, a method of outputting schedule information based on the location of a mobile communication terminal is provided. The method comprises the steps of: registering, in response to a user's request, at least one piece of location information for determining whether to inform of schedule information based on the location of the mobile communication terminal, and schedule information corresponding to the location information; detecting current location information of the mobile communication terminal; if the current location of the mobile communication terminal is detected, determining whether to output schedule information corresponding to the current location based on the registered location information; and selectively outputting the registered schedule information according to the determination result.

According to another aspect an exemplary embodiment of the present invention, a mobile communication terminal is provided. The mobile communication terminal comprises: a memory for storing, in response to a user's request, at least one piece of location information to determine whether to inform of schedule information based on the location of the mobile communication terminal, and schedule information corresponding to the location information; a GPS receiver for receiving GPS signals; a location information detector for detecting a current location of the mobile communication terminal using the GPS signals; and a controller for determining whether to output schedule information corresponding to the current location based on the stored location information if the current location of the mobile communication terminal is detected.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following detailed description when taken in conjunction with the accompanying drawings comprising:
FIG. 1 is a block diagram illustrating a mobile communication terminal according to an exemplary embodiment of the present invention;
FIG. 2 is a table illustrating location information corresponding to places according to an exemplary embodiment of the present invention;
FIGs. 3A through 3G are displays of screens illustrating a process for registering a schedule on a mobile communication terminal according to an exemplary embodiment of the present invention; and
FIG. 4 is a flowchart illustrating a process of outputting schedule information based on the location of a mobile communication terminal according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modification of the embodiments described herein can be made without departing from the scope and spirit of the invention. Also, descriptions of well-known functions and construction are omitted for clarity and conciseness

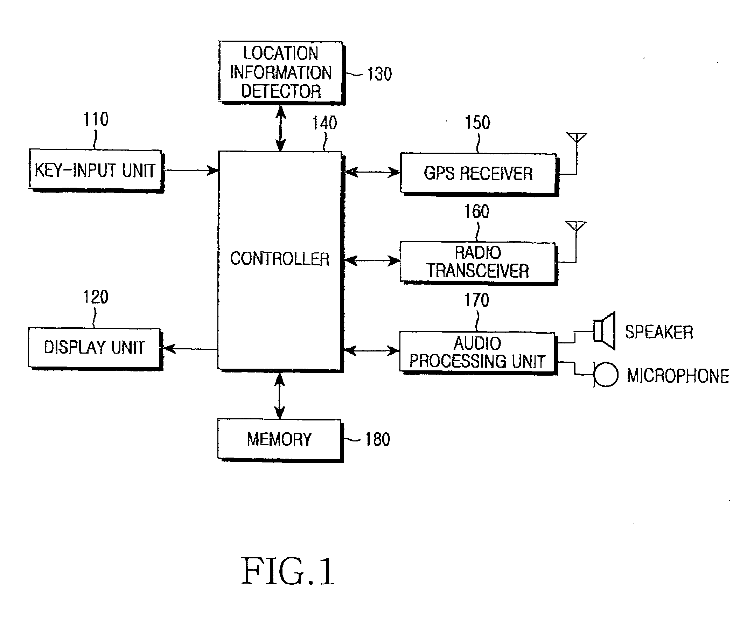

FIG. 1 is a block diagram illustrating a mobile communication terminal according to an exemplary embodiment of the present invention.

Referring to FIG. 1, a mobile communication terminal includes a key-input unit 110, a display unit 120, a location information detector 130, a controller 140, a GPS receiver 150, a radio transceiver 160, an audio processing unit 170, and a memory 180.

The key-input unit 110 includes character keys, number keys, and other function keys with a matrix structure (not shown) to output a key-input signal corresponding to a key selected by a user to the controller 140.

The display unit 120 may comprise a Liquid Crystal Display (LCD) and outputs various kinds of display data created by the mobile communication terminal. According to an exemplary embodiment of the present invention, the display unit 120 also displays pictures required to register and store location information and corresponding schedule information.

The display unit 120 may output On Screen Display (OSD) data based on a picture size processed by an image processing unit (not shown) having an OSD function, not shown in FIG. 1.

The location information detector 130 determines the location information of the mobile communication terminal using GPS signals received through the GPS receiver 150.

The controller 140 controls the entire operation of the mobile communication terminal according to an exemplary embodiment of the present invention. In response to a user's request, the controller 140 also controls operations required to store location information in the memory 180 . The location information determines whether to inform of schedule information based on the location of the mobile communication terminal, and schedule information corresponding to the location information. That is, the controller 140 controls the location information detector 130 to calculate a current location of the mobile communication terminal using GPS signals received through the GPS receiver 150. The controller 140 also controls the location information detector 130 to store a place where the mobile communication terminal is located, the extent around the place, and relevant schedule information using the calculated current location information.

The controller 140 also controls the location information detector 130 to detect a current location of the mobile communication terminal. Herein, the controller 140 can detect the current location of the mobile communication terminal every time a user request is input or every predetermined period of time (e.g., 10 minutes). The period of time can be set by the user.

After detecting the current location of the mobile communication terminal, the controller 140 determines whether to output schedule information corresponding to the current location of the mobile communication terminal based on location information stored in the memory 180.

The GPS receiver 150 receives GPS signals from GPS satellites (not shown) and transmits the received GPS signals to the controller 140.

The radio transceiver 160 is a radio frequency (RF) module including a high frequency module, an intermediate frequency module, and a baseband processing module. The controller 140 controls the radio transceiver 160 to transmit/receive voice data, text data, image data, and control data.

The audio processing unit 170 can include a codec made up of a data codec for processing packet data and an audio codec for processing audio signals such as voice.

The audio processing unit 170 converts an electrical signal received through a microphone to voice data in a modulation process, and demodulates coded voice data received through the radio transceiver 160 to an electrical signal and outputs the electrical signal to a speaker. It is preferable that the audio processing unit 170 include a codec to convert a digital audio signal received through the radio transceiver 160 to an analog audio signal or convert an analog audio signal generated by the microphone to a digital audio signal. The codec includes a data codec for processing packet data and an audio codec for processing audio signals such as voice. The codec can be included in the controller 140.

The memory 180 stores various kinds of information required for an operation control of the mobile communication terminal according to an exemplary embodiment of the present invention. The controller 140 controls the memory 180 to store at least one piece of location information for the controller 140 to determine whether to inform of schedule information based on a location of the mobile communication terminal, and schedule information corresponding to the location information, based on location information such as a specific place. In an exemplary implementation, the controller 140 may control the memory 180 to separately store the location information, and the location information includes information including the extent indicating a radius of a certain location (e.g., a specific place).

The memory 180 can be implemented with a first memory for storing location information indicating each place and a second memory for storing schedule information corresponding to the location information.

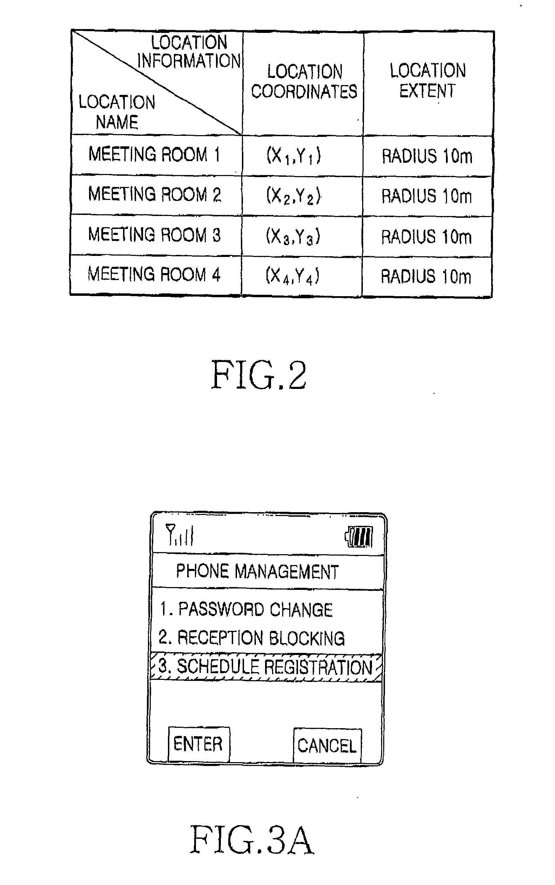

FIG. 2 is a table illustrating location information corresponding to places according to an exemplary embodiment of the present invention.

Referring to FIG. 2, the memory 180 stores location information comprising location coordinates calculated from GPS signals and location extents indicating radiuses of the locations based on user selection information are included, and location names corresponding to the location information.

The location coordinates calculated from GPS signals can be latitude and longitude coordinates such as: (X1, Y1), (X2, Y2), (X3, Y3) and (X4, Y4), and the location extents can be set to radiuses 1m, 5m and 10m based on user selection information.

The location names corresponding to the location information can be a meeting room 1, a meeting room 2, a meeting room 3, and a meeting room 4, and the location information and the relevant location names can be registered/stored in a schedule registering process through an interface with a user.

FIGs. 3A to 3G are displays of screens illustrating the process for registering a schedule on a mobile communication terminal according to an exemplary embodiment of the present invention.

FIG. 3A shows a phone management menu screen of the mobile communication terminal according to an exemplary embodiment of the present invention. On the phone management menu screen, menu options of "1. password change", "2. reception blocking" and "3. schedule registration" are illustrated.

The "3. schedule registration" menu option of FIG. 3A is selected to calculate the location of the mobile communication terminal using GPS signals received through the GPS receiver 150 and register/store the place where the mobile communication terminal is located, the extent, and relevant schedule information Also, the menu can be implemented with a general schedule management menu of the mobile communication terminal.

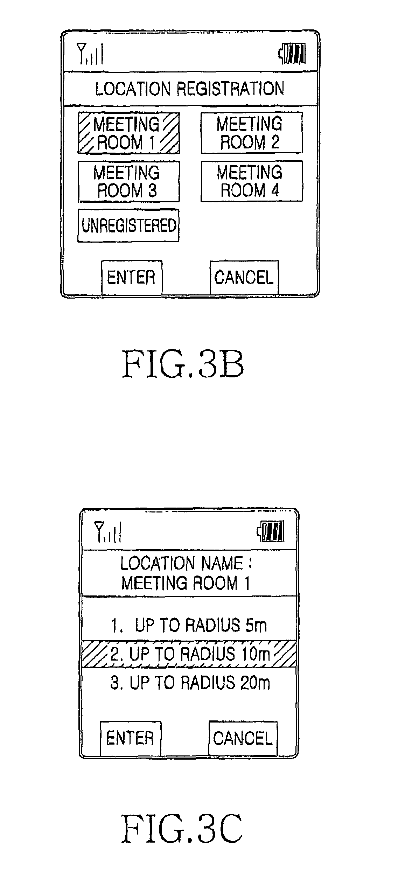

If the user selects the "3. schedule registration" menu option of FIG. 3A, the mobile communication terminal displays a location registration screen as illustrated in FIG. 3B.

As illustrated in FIG. 3B, on the location registration screen, icons of "meeting room 1," "meeting room 2," "meeting room 3," "meeting room 4," and "unregistered" can be displayed, wherein the reserved icon can be used for the user to register a new location name or place name.

If the user selects the "meeting room 1" icon on the location registration screen of FIG. 3B and pushes an enter key, the mobile communication terminal displays a screen for the user to select the location extent of the meeting room 1 as illustrated in FIG. 3C. FIG. 3C shows an example of location extents of "1. up to radius 5m", "2. up to radius 10m" and "3. up to radius 20m."

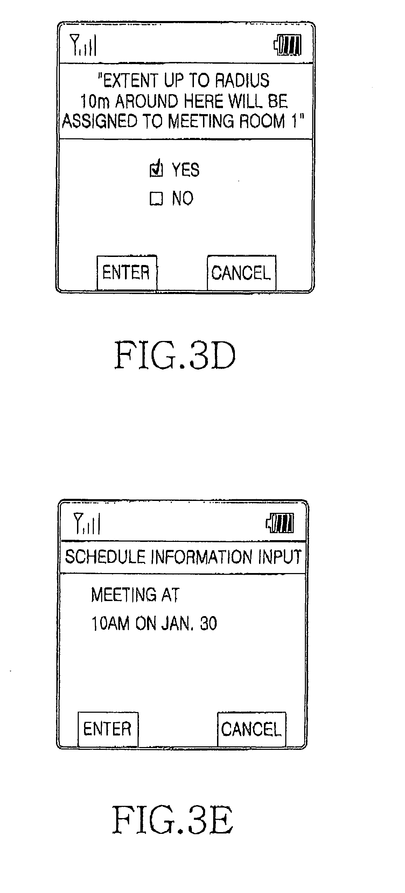

If the user selects the "2. up to radius 10m" menu option on the screen of FIG. 3C and pushes the enter key, the mobile communication terminal displays a message of "The extent up to radius 10m around here will be assigned to the meeting room 1" as illustrated in FIG. 3D. Then when the user selects "yes" with a cursor key and pushes the enter key, the mobile communication terminal displays a screen through which the user inputs schedule information as illustrated in FIG. 3E.

FIG. 3E shows a screen on which schedule information of "meeting at 10 AM on Jan. 30" input by the user is displayed. If the user pushes the enter key, the process of registering the schedule information corresponding to the "meeting room 1" is finished.

If the mobile communication terminal separately stores location information including set location extents, the user may select specific location information among the separately stored location information and register schedule information corresponding to the selected specific location information without necessary to be located at the specific place to register/store the schedule information.

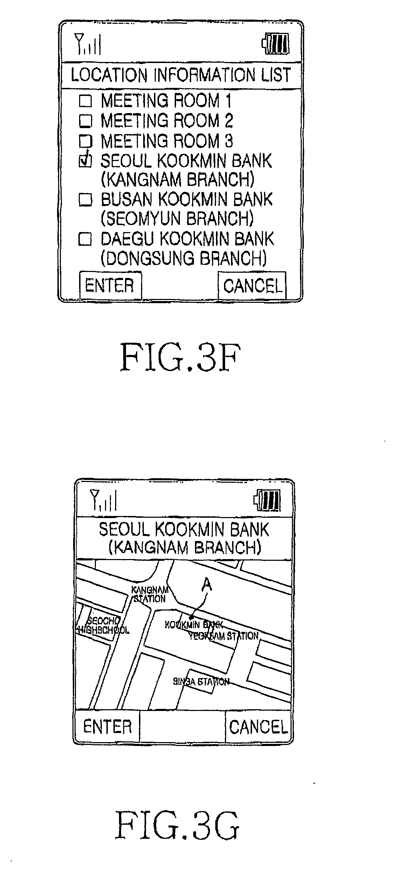

That is, if the user selects the "3. schedule registration" menu on the screen of FIG. 3A, the mobile communication terminal generates a list of the separately stored location information and displays the generated location information list as illustrated in FIG. 3F.

FIG. 3F shows a case where the user has selected "Seoul Kookmin bank Kangnam branch" as location information of which schedule information is registered from the location information list. If location information (e.g., "Seoul Kookmin bank Kangnam branch") of which schedule information is registered is selected from the location information list, the mobile communication terminal registers the selected location information and schedule information corresponding to the selected location information through the procedures of FIGs. 3C to 3E.

The user can request the mobile communication terminal to access an extra server in which a predetermined location name and location coordinates corresponding to the location are stored and to download the location name and the location coordinates from the server. In this case, the mobile communication terminal may set the extent of the downloaded location based on information input by the user and register/store schedule information corresponding to the location information including the set location extent. In an exemplary implementation, if the extra server stores digital map data for location information, the mobile communication terminal may download digital map information corresponding to a predetermined location information from the extra server and display the downloaded digital map information as illustrated in FIG. 3G. The Fig. 3G shows a digital map indicating a location of "Seoul Kookmin Bank Gangnam branch (A)" when "Seoul Kookmin Bank Gangnam branch" is selected as location information to register schedule information by a user in the screen.

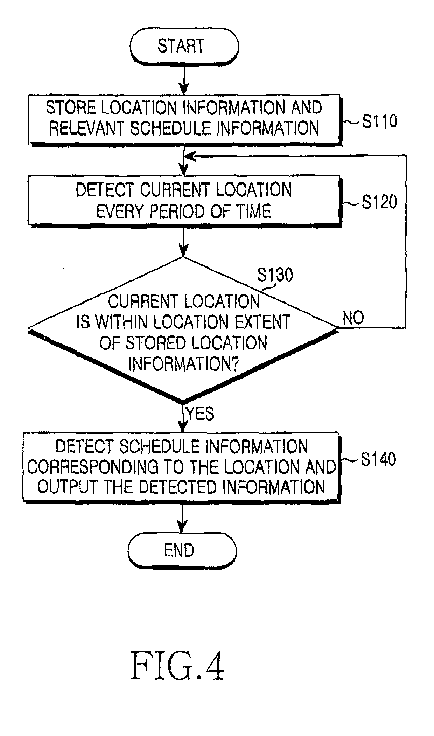

FIG. 4 is a flowchart illustrating a process of outputting schedule information based on the location of the mobile communication terminal according to an exemplary embodiment of the present invention.

Referring to FIGs. 1 and 4, in step S110, the controller 140 , in response to a user's request, controls operations required to store location infonnation in the memory 180 for determining whether to inform of schedule information based on the location of the mobile communication terminal, and schedule information corresponding to the location information. In an-exemplary implementation it is preferable that the memory 180 store the schedule information based on the location information, such as places, the user can register at least one piece of the schedule information. Since the process of registering location information and schedule information corresponding to the location information has been described with reference to FIGs. 3A to 3G, the description is omitted for clarity and conciseness. In step 120, the controller 140 detects a current location of the mobile communication terminal using the GPS receiver 150. The current location means latitude and longitude coordinates. In an exemplary implementation, the controller 140 can detect the current location of the mobile communication terminal every time a user request is input or every predetermined period of time (e.g., 10 minutes). The period of time can be set by the user.

If a current location of the mobile communication terminal is detected, in step S130, the controller 140 examines whether the detected current location is within the location extent of certain location information (e.g., meeting room 1) stored in the memory 180 in order to determine whether to output schedule information corresponding to the detected current location based on the stored location information.

If the detected current location of the mobile communication terminal is not within the location extent of the location information stored in the memory 180, the controller 140 returns to the step S 120 of detecting a current location of the mobile communication terminal every predetermined period of time.

If the detected current location of the mobile communication terminal is within the location extent of the location information stored in the memory 180, in step S140, the controller 140 detects schedule information corresponding to the location information from the memory 180. In an exemplary implementation the controller 140 can control the audio processing unit 170 to output the schedule information with voice, control the display unit 120 to output the schedule information with a text message, or control the audio processing unit 170 and the display unit 120 to output the schedule information with an alarm and text message.

As described above, according to exemplary embodiments of the present invention, user's convenience increases by informing a user of registered schedule information based on the location of a mobile communication terminal. While the invention has been shown and described with reference to certain exemplary embodiments thereof, it will be understood by those skilled in the art that various changes in form and details may be made therein without departing from the spirit and scope of the invention as defined by the appended claims.

## Claims

1. A method of outputting schedule information based on the location of a mobile communication terminal, the method comprising the steps of:
registering at least one piece of location information for determining whether to inform of schedule information based on the location of the mobile communication terminal, and schedule information corresponding to the location information in response to a user's request;
detecting current location of the mobile communication terminal;
determining whether to output the schedule information corresponding to the location based on the registered location information if the current location of the mobile communication terminal is detected; and
selectively outputting the schedule information according to the determination result.

2. The method of claim 1, wherein the location information for determining whether to inform of schedule information comprises information in which the location extent indicating a radius of the location is set by a user request.

3. The method of claim 1, wherein the step of registering comprises the steps of:
determining the location of the mobile communication terminal by receiving GPS signals;
setting the extent of the location based on information input by a user;
receiving schedule information corresponding to the location information ; and
storing the location information and the schedule information corresponding to the location information.

4. The method of claim 1, wherein the step of registering comprises the steps of:
Accessing an extra server in which a location name and location coordinates corresponding to the stored location are stored;
downloading the location name and the location coordinates from the extra server;
setting the extent of the location based on information input by a user;
receiving schedule information corresponding to location information in which the location extent is set; and
registering the location information and the schedule information corresponding to the location information.

5. The method of claim 4, wherein the step of registering comprises the steps of:
if the extra server stores digital map data, downloading digital map information of the location corresponding to the location name from the extra server; and
displaying the downloaded digital map information.

6. The method of claim 3 or 4, further comprising the step of separately storing the location information in which the location extent is set.

7. The method of claim 6, further comprising the steps of:
generating a list of the stored at least one piece of location information in response to a user's schedule information register request and displaying the generated list;
receiving schedule information corresponding to location information selected by the user from the displayed list; and
registering the location information and the schedule information corresponding to the location information.

8. The method of claim 1, wherein in the step of detecting, a current location of the mobile communication terminal is detected in response to a user request.

9. The method of claim 1, wherein in the step of detecting, a current location of the mobile communication terminal is detected every set period of time.

10. The method of claim 2, wherein in the step of determining, whether to output schedule information corresponding to the location is determined by checking whether the detected current location of the mobile communication terminal is within the location extent of the registered location information.

11. The method of claim 10, wherein in the step of outputting, if the detected current location of the mobile communication terminal is within the location extent of the registered location information, schedule information corresponding to the location is output.

12. A mobile communication terminal comprising:
a memory for storing at least one piece of location information to determine whether to inform of schedule information based on the location of the mobile communication terminal, and schedule information corresponding to the location information in response to a user's request;
a GPS receiver for receiving GPS signals;
a location information detector for detecting a current location of the mobile communication terminal using the GPS signals; and
a controller for determining whether to output schedule information corresponding to the current location based on the stored location information when the current location of the mobile communication terminal is detected.

13. The mobile communication terminal of claim 12, wherein the location information for determining whether to inform of schedule information comprises information in which the location extent indicating a radius of the location is set by a user request.

14. The mobile communication terminal of claim 12, wherein the controller determines the location of the mobile communication terminal using the GPS signals and controls the memory to store therein location information in which the location extent of the determined location is set and schedule information corresponding to the location information.

15. The mobile communication terminal of claim 12, wherein the controller receives a location name and location coordinates corresponding to the location from an extra server in which the location name and the location coordinates are stored and controls the memory to store therein location information in which the location extent of the location is set and schedule information corresponding to the location information.

16. The mobile communication terminal of claim 15, wherein the controller downloads digital map information of the location corresponding to the location name from the extra server if the extra server stores digital map data, and displays the downloaded digital map information.

17. The mobile communication terminal of claim 14 or 15, wherein the controller controls the memory to separately store the location information in which the location extent is set.

18. The mobile communication tenrnnat of claim 17, wherein the controller generates a list of the stored at least one piece of location information if a user's schedule information register request is input, displays the generated list, and controls the memory to store location information selected by the user from the displayed list and schedule information corresponding to the location information.

19. The mobile communication terminal of claim 12, wherein the controller controls the location information detector to detect a current location of the mobile communication terminal if a user request is input.

20. The mobile communication terminal of claim 12, wherein the controller controls the location information detector to detect a current location of the mobile communication terminal every set period of time.

21. The mobile communication terminal of claim 13, wherein the controller determines whether to output schedule information corresponding to the location by checking whether the detected current location of the mobile communication terminal is within the location extent of the registered location information.

22. The mobile communication terminal of claim 21, wherein if the detected current location of the mobile communication terminal is within the location extent of the registered location information, the controller outputs schedule information corresponding to the location.
